# EUROPEAN PATENT APPLICATION

(11) **EP 4 224 028 A1**
(43) Date of publication of application: **09.08.2023**
(21) Application number: 21874895.2
(22) Date of filing: 02.08.2021
(51) Int. Cl.: F16C 33/80, F16J 15/3204, F16J 15/447

(54) **SEALING DEVICE**

(30) Priority: 29.09.2020 JP 2020163990
(71) Applicant: NOK Corporation, Minato-ku Tokyo 105-8585 (JP)
(72) Inventor: NOMURA Ryosuke, Fukushima-shi, Fukushima 960-1193 (JP)
(74) Representative: Global IP Europe Patentanwaltskanzlei
(86) International application number: PCT/JP2021/028598
(87) International publication number: WO 2022/070592

(57) **Abstract**

Sealing performance is further improved while restraining an increase in temperature and an increase in pressure in an internal space of a bearing. A sealing device (1) includes an annular outer periphery member (10) to be attached to an outer ring and an annular inner periphery member (20) to be attached to an inner ring. The outer periphery member (10) includes an outer periphery opposing surface (30) that is an annular surface around and extending along an axis line (x), and the inner periphery member (20) includes an inner periphery opposing surface (40) that is an annular surface around and extending along the axis line (x). The outer periphery opposing surface (30) and the inner periphery opposing surface (40) are provided such that the inner periphery opposing surface (40) opposes the outer periphery opposing surface (30) from an inner periphery side so as to form an annular space (g). A plurality of inner periphery side projections (50) is formed on the inner periphery opposing surface (40), the inner periphery side projections (50) projecting from the inner periphery opposing surface (40) toward an outer periphery side and extending along the axis line (x).

## Description

### Technical Field

The present invention relates to a sealing device for a bearing.

### Background Art

A sealing device is used for a bearing to prevent leakage of a lubricant in the bearing, as well as to prevent entry of foreign matter such as dust, muddy water, or water into an internal space, which is a space that houses a rolling element between an outer ring and an inner ring. In the internal space, opposite end portions in an axial direction are opened and the sealing device is attached to each of the opposite end portions so as to seal the internal space.

Accompanying the rotation of a shaft supported by the bearing, the temperature in the internal space of the bearing increases and the pressure in the internal space increases. In particular, in a bearing that supports a shaft that rotates at high speed, such as a bearing for an axle of a railway vehicle, accompanying the rotation of the shaft, the temperature in the internal space increases and the pressure in the internal space increases.

A sealing device having a configuration for restraining such increases in temperature and pressure in the internal space has conventionally been proposed, and for example, in a lip seal-type sealing device, a sealing device provided with a vent that can discharge air in the internal space has been proposed (see, for example, Patent Literature 1). Further, a labyrinth seal-type sealing device has also been proposed.

### Document List

### Patent Literature

Patent Literature 1: Japanese Patent Application Publication No. 2008-232301

### Summary of Invention

### Technical Problem

Although a sealing device having a configuration for restraining increases in temperature and pressure in the internal space of the bearing due to the rotation of the shaft has conventionally been proposed, in a sealing device having a vent, there is a possibility that the vent fails to function due to the vent clogged. Further, a labyrinth seal-type sealing device is required to have a further improved sealing performance.

As in the foregoing, the conventional sealing device used for the bearing has been required to have a configuration capable of improving the sealing performance while restraining an increase in temperature and an increase in pressure in the internal space of the bearing.

The present invention has been made in view of the above-described problem, and it is an object of the present invention to provide a sealing device capable of improving the sealing performance while restraining an increase in temperature and an increase in pressure in the internal space of the bearing.

### Solution to Problem

To achieve the aforementioned object, a sealing device according to the present invention is a sealing device for sealing a space between an inner ring and an outer ring of a bearing, and is characterized by including an outer periphery member being annular around an axis line and being attached to the outer ring and an inner periphery member being annular around the axis line and being attached to the inner ring, in which the outer periphery member includes an outer periphery opposing surface that is an annular surface around and extending along the axis line, the inner periphery member includes an inner periphery opposing surface that is an annular surface around and extending along the axis line, the outer periphery opposing surface and the inner periphery opposing surface are provided such that the inner periphery opposing surface opposes the outer periphery opposing surface from an inner periphery side so as to form an annular space, and a plurality of inner periphery side projections is formed on the inner periphery opposing surface, the inner periphery side projections projecting from the inner periphery opposing surface toward an outer periphery side and extending along the axis line.

In the sealing device according to an aspect of the present invention, a width in a direction around the axis line of each of the inner periphery side projections is tapered as progress toward a side of the space.

In the sealing device according to an aspect of the present invention, a projecting amount of the inner periphery side projections from the inner periphery opposing surface is reduced as progress toward the side of the space.

In the sealing device according to an aspect of the present invention, the outer periphery opposing surface has a diameter enlarged as progress toward the side of the space.

In the sealing device according to an aspect of the present invention, the inner periphery side projections are formed with an elastic material.

In the sealing device according to an aspect of the present invention, a plurality of outer periphery side projections is formed on the outer periphery opposing surface, the outer periphery side projections projecting from the outer periphery opposing surface toward the inner periphery side and extending along the axis line.

In the sealing device according to an aspect of the present invention, the outer periphery side projections are formed with an elastic material.

In the sealing device according to an aspect of the present invention, an end face on the outer periphery side of the inner periphery member is provided with a dust lip, the dust lip being formed so as to contact the outer periphery member.

### Effects of Invention

According to a sealing device of the present invention, a sealing performance can be improved while restraining an increase in temperature and an increase in pressure in an internal space of a bearing.

### Brief Description of Drawings

[Fig. 1] Fig. 1 is a cross-sectional view of a cross-section along an axis line, showing the schematic configuration of a sealing device according to a first embodiment of the present invention.
[Fig. 2] Fig. 2 is an enlarged cross-sectional view showing one side of the cross-section of the sealing device shown in Fig. 1.
[Fig. 3] Fig. 3 is a partially enlarged cross-sectional view of the sealing device shown in Fig. 1.
[Fig. 4] Fig. 4 is a partially enlarged view schematically showing an inner periphery opposing surface of an inner periphery member of the sealing device shown in Fig. 1 as viewed from a radial outer periphery side, the view showing inner periphery side projections.
[Fig. 5] Fig. 5 is a partially enlarged perspective view showing an enlarged one of the inner periphery side projections shown in Fig. 4.
[Fig. 6] Fig. 6 is a cross-sectional view along an extending direction of the inner periphery side projection shown in Fig. 5.
[Fig. 7] Fig. 7 is a cross-sectional view along a width direction orthogonal to the extending direction of the inner periphery side projection shown in Fig. 5.
[Fig. 8] Fig. 8 is a cross-sectional view of the sealing device according to the first embodiment of the present invention, in a usage state of being attached to a bearing.
[Fig. 9] Fig. 9 is a view for showing a movement of a lubricant in the usage state.
[Fig. 10] Fig. 10 is a view for showing a movement of a lubricant in the usage state.
[Fig. 11] Fig. 11 is an enlarged cross-sectional view showing one side of a cross-section along an axis line of a sealing device according to a second embodiment of the present invention.
[Fig. 12] Fig. 12 is a partially enlarged cross-sectional view of the sealing device shown in Fig. 11.
[Fig. 13] Fig. 13 is a partially enlarged perspective view showing an enlarged outer periphery side projection.
[Fig. 14] Fig. 14 is a cross-sectional view of the sealing device in the usage state of being attached to a bearing.
[Fig. 15] Fig. 15 is a cross-sectional view showing a modification of the inner periphery member of the sealing devices according to the first and the second embodiments of the present invention.
[Fig. 16] Fig. 16 is a cross-sectional view showing a modification of the inner periphery member of the sealing devices according to the first and the second embodiments of the present invention.
[Fig. 17] Fig. 17 is a cross-sectional view showing a modification of the inner periphery side projection of the sealing devices according to the first and the second embodiments of the present invention.

### Description of Embodiments

Hereinafter, the embodiments of the present invention will be described with reference to the drawings.

A sealing device 1 according to a first embodiment of the present invention is a sealing device for sealing a space between an inner ring and an outer ring of a bearing. As will be described later, the sealing device 1 is for use in, for example, a bearing for an axle of a railway vehicle, and seals an internal space, which is a space between the inner ring and the outer ring, in order to prevent leakage of a lubricant for a rolling element in the internal space and to prevent entry of foreign matter such as dust, muddy water, or water into the internal space from the outside. Note that the object (attachment object) to which the sealing device 1 is applied is not limited to the bearing for the axle of the railway vehicle.

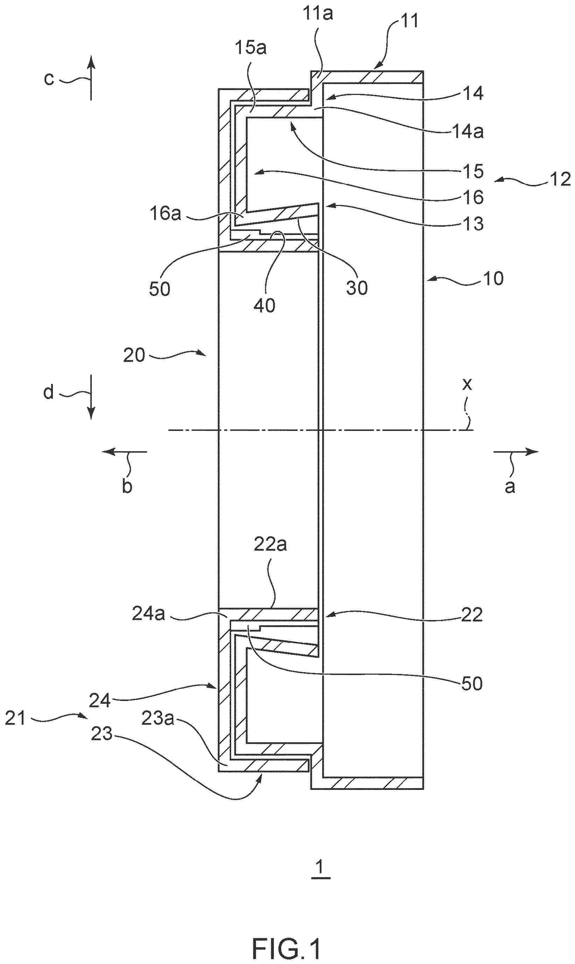

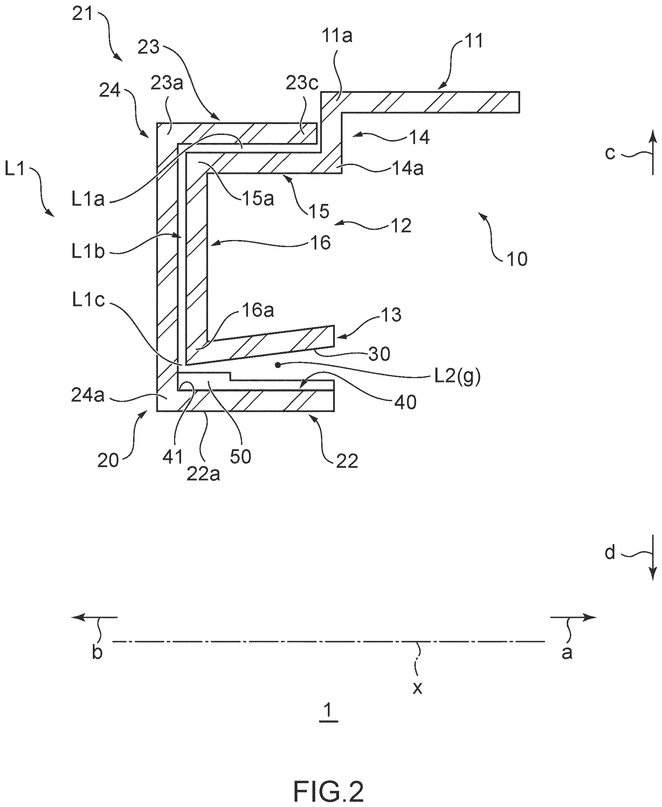

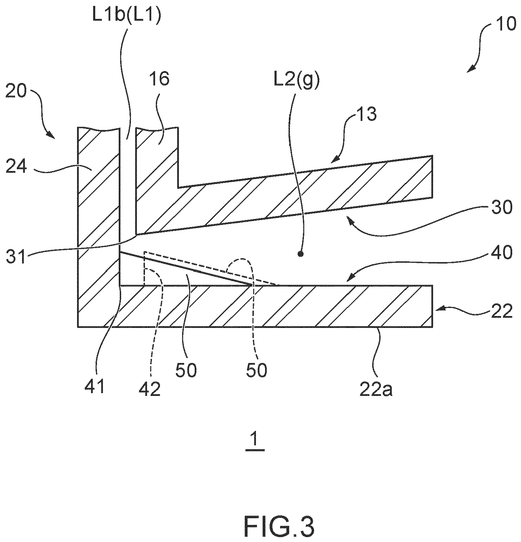

Fig. 1 is a cross-sectional view of a cross-section along an axis line x, showing the schematic configuration of the sealing device 1. Fig. 2 is an enlarged cross-sectional view showing one side of the cross-section of the sealing device 1 shown in Fig. 1. Fig. 3 is a partially enlarged cross-sectional view of the sealing device 1, showing enlarged outer periphery opposing surface 30 and inner periphery opposing surface 40, which will be described later. Hereinafter, for convenience of explanation, the side in the direction of an arrow a (see Figs. 1 and 2) in the axis line x direction is an inner side and the side in the direction of an arrow b (see Figs. 1 and 2) in the axis line x direction is an outer side. More specifically, the inner side is a side of the internal space of the bearing, which is a side (a side of an object to be sealed) of a space where a lubricant as an object to be sealed is present, and the outer side is a side opposite to the side of the object to be sealed, which is a side where the object to be sealed is prevented from being leaked and is an atmospheric side. Further, in a direction (hereinafter also referred to as a "radial direction") perpendicular to the axis line x, a side in the direction (the direction of an arrow c of Figs. 1 and 2) moving away from the axis line x is an outer periphery side, and a side in the direction (the direction of an arrow d of Figs. 1 and 2) approaching the axis line x is an inner periphery side.

As shown in Figs. 1 and 2, the sealing device 1 according to the first embodiment of the present invention includes an outer periphery member 10 being annular around the axis line x and being attached to an outer ring and an inner periphery member 20 being annular around the axis line x and being attached to an inner ring. The outer periphery member 10 includes an outer periphery opposing surface 30 that is an annular surface around and extending along the axis line x, and the inner periphery member 20 includes an inner periphery opposing surface 40 that is an annular surface around and extending along the axis line x. The outer periphery opposing surface 30 and the inner periphery opposing surface 40 are provided such that the inner periphery opposing surface 40 opposes the outer periphery opposing surface 30 from the inner periphery side so as to form an annular space g. A plurality of inner periphery side projections 50 is formed on the inner periphery opposing surface 40, the inner periphery side projections 50 projecting from the inner periphery opposing surface 40 toward the outer periphery side and extending along the axis line x. Hereinafter the configuration of the sealing device 1 will be specifically described.

The outer periphery member 10 is an annular hollow member around the axis line x and is formed so as to be attachable to the outer ring of the bearing on the outer periphery side, as described above, and so as to allow the inner ring to be inserted on the inner periphery side. Specifically, as shown in Figs. 1 and 2, the outer periphery member 10 includes, from the outer periphery side, an attaching portion 11 formed so as to be attachable to the outer ring, an outer periphery side labyrinth seal forming portion 12, and an inner periphery side labyrinth seal forming portion 13. The outer periphery side labyrinth seal forming portion 12 is a portion forming, together with the inner periphery member 20, a labyrinth seal L1 on the outer periphery side of the sealing device 1. Further, the inner periphery side labyrinth seal forming portion 13 is a portion forming, together with the inner periphery member 20, a labyrinth seal L2 on the inner periphery side of the sealing device 1 and is a portion having the outer periphery opposing surface 30.

The attaching portion 11 is formed to be fixable to an opening of the outer ring of the bearing as an attachment object in the usage state as will be described later, and is formed so as to be able to be press-fitted into the opening of the outer ring, for example. Specifically, as shown in Figs. 1 and 2, the attaching portion 11 is a cylindrical or a substantially cylindrical portion having the axis line x as the center axis or substantially the center axis. The attaching portion 11 may be formed such that a part of the inner side (the side in the direction of the arrow a) is fixable to the opening of the outer ring, as shown in Figs. 1 and 2, or may be formed such that the whole in the axis line x direction is fixable to the opening of the outer ring.

In the usage state as will be described later, the outer periphery side labyrinth seal forming portion 12 is a portion opposing a part of the inner periphery member 30 to form an annular gap so as to form the labyrinth seal L1. The outer periphery side labyrinth seal forming portion 12 is formed continuously with an end portion (an end portion 11a) on the outer side (the side in the direction of the arrow b) of the attaching portion 11, and is continuous with the end portion 11a via a step portion 14 in the present embodiment. As shown in Figs. 1 and 2, the step portion 14 is a portion connecting the attaching portion 11 and the outer periphery side labyrinth seal forming portion 12 so as to position the outer periphery side labyrinth seal forming portion 12 on the inner periphery side relative to the attaching portion 11, and the step portion 14 forms a step between the attaching portion 11 and the outer periphery side labyrinth seal forming portion 12 in the outer periphery member 10. The step portion 14 is, for example, a disk-like or a substantially disk-like portion having the radially extending axis line x as the center or substantially the center. Note that in the outer periphery member 10, the outer periphery side labyrinth seal forming portion 12 may be directly connected to the attaching portion 11, without having the step portion 14.

As shown in Figs. 1 and 2, for example, the outer periphery side labyrinth seal forming portion 12 includes an axial sealing portion 15 and a radial sealing portion 16. The axial sealing portion 15 is a tubular portion extending from an end portion (an end portion 14a) on the inner periphery side of the step portion 14 toward the outer side and the radial sealing portion 16 is an annular plate-like portion extending from an end portion (an end portion 15a) on the outer side of the axial sealing portion 15 toward the inner periphery side. As shown in Figs. 1 and 2, for example, the axial sealing portion 15 is a cylindrical or a substantially cylindrical portion having the axis line x as the center axis or substantially the center axis. As shown in Figs. 1 and 2, for example, the radial sealing portion 16 is a disk-like or a substantially disk-like portion having the axis line x as the center or substantially the center.

As will be described later, the axial sealing portion 15 opposes a part of the inner periphery member 20 from the inner periphery side to form an annular gap extending along the axis line x so as to form a labyrinth sealing portion L1a extending along the axis line x between the axial sealing portion 15 and the inner periphery member 20. Further, as will be described later, the radial sealing portion 16 opposes a part of the inner periphery member 20 from the inner side to form an annular gap extending along the radial direction so as to form a labyrinth sealing portion L1b extending along the radial direction between the radial sealing portion 16 and the inner periphery member 20. The labyrinth sealing portion L1a and the labyrinth sealing portion L1b communicate with each other and form the labyrinth seal L1.

As will be described later, in the usage state, the inner periphery side labyrinth seal forming portion 13 is a portion opposing a part of the inner periphery member 20 to form an annular gap so as to form the labyrinth seal L2. The labyrinth seal L2 formed by the inner periphery side labyrinth seal forming portion 13 extends along the axis line x. The inner periphery side labyrinth seal forming portion 13 extends from an end portion (an end portion 16a) on the inner periphery side of the radial sealing portion 16 of the outer periphery side labyrinth seal forming portion 12 toward the inner side. As described above, the inner periphery side labyrinth seal forming portion 13 includes the outer periphery opposing surface 30, and a tubular surface facing the inner periphery side of the inner periphery side labyrinth seal forming portion 13 forms the outer periphery opposing surface 30. As shown in Figs. 1 and 2, for example, the outer periphery opposing surface 30 has a diameter enlarged as progress toward the inner side, and is a portion in a truncated cone surface shape or a substantially truncated cone surface shape having the axis line x as the center axis or substantially the center axis, for example. Further, as shown in Figs. 1 and 2, for example, the inner periphery side labyrinth seal forming portion 13 has a diameter enlarged as progress toward the inner side, and is a portion in a truncated cone tubular shape or a substantially truncated cone tubular shape having the axis line x as the center axis or substantially the center axis, for example. The truncated cone surface is a side surface of a truncated cone, and the truncated cone tube is a hollow tube extending along the side surface of the truncated cone.

As will be described later, the outer periphery opposing surface 30 of the inner periphery side labyrinth seal forming portion 13 opposes the inner periphery opposing surface 40 of the inner periphery member 20 to form the labyrinth seal L2. The labyrinth seal L2 communicates with the labyrinth seal L1, and specifically, connects to an end portion (an end portion L1c) on the inner periphery side of the labyrinth seal L2 extending on the inner periphery side of the labyrinth seal L1.

The inner periphery member 20 is an annular hollow member around the axis line x and is formed so as to allow the inner ring of the bearing to be inserted and so as to be attachable to the inner ring on the inner periphery side, as described above. Specifically, as shown in Figs. 1 and 2, the inner periphery member 20 includes, from the outer periphery side, an outer periphery side labyrinth seal forming portion 21 and an inner periphery side labyrinth seal forming portion 22. The outer periphery side labyrinth seal forming portion 21 is a portion opposing the outer periphery side labyrinth seal forming portion 12 of the outer periphery member 10 to form the labyrinth seal L1 on the outer periphery side of the sealing device 1. Further, the inner periphery side labyrinth seal forming portion 22 is a portion opposing the inner periphery side labyrinth forming portion 13 of the outer periphery member 10 to form the labyrinth seal L2 and is a portion including the inner periphery opposing surface 40. In addition, the inner periphery side labyrinth seal forming portion 22 is also an attaching portion formed so as to be attachable to the inner ring of the bearing.

As shown in Figs. 1 and 2, for example, the outer periphery side labyrinth seal forming portion 21 includes an axial sealing portion 23 and a radial sealing portion 24. The axial sealing portion 23 is a portion forming an end portion on the outer periphery side of the inner periphery member 20 and is a tubular portion extending along the axis line x, and the radial sealing portion 24 is an annular plate-like portion extending from an end portion (an end portion 23a) on the outer side of the axial sealing portion 23 toward the inner periphery side. As shown in Figs. 1 and 2, for example, the axial sealing portion 23 is a cylindrical or a substantially cylindrical portion having the axis line x as the center axis or substantially the center axis. As shown in Figs. 1 and 2, for example, the radial sealing portion 24 is a disk-like or a substantially disk-like portion having the axis line x as the center or substantially the center.

The axial sealing portion 23 opposes the axial sealing portion 15 of the outer periphery member 10 from the outer periphery side to form an annular gap extending along the axis line x so as to form the labyrinth sealing portion L1a extending along the axis line x between the axial sealing portion 23 and the outer periphery member 10. Further, the radial sealing portion 24 opposes the radial sealing portion 16 of the outer periphery member 10 from the outer side to form an annular gap extending along the radial direction so as to form the labyrinth sealing portion L1b extending along the radial direction between the radial sealing portion 24 and the outer periphery member 10.

The inner periphery side labyrinth seal forming portion 22 extends from an end portion (an end portion 24a) on the inner periphery side of the radial sealing portion 24 of the outer periphery side labyrinth seal forming portion 21 toward the inner side. As described above, the inner periphery side labyrinth seal forming portion 22 includes the inner periphery opposing surface 40 and a tubular surface facing the outer periphery side of the inner periphery side labyrinth seal forming portion 22 forms the inner periphery opposing surface 40. The inner periphery opposing surface 40 of the inner periphery side labyrinth seal forming portion 22 opposes the outer periphery opposing surface 30 of the outer periphery member 10 from the inner periphery side to form the labyrinth seal L2, as described above. As shown in Figs. 1 and 2, for example, the inner periphery side labyrinth seal forming portion 22 is a cylindrical or a substantially cylindrical portion having the axis line x as the center axis or substantially the center axis, and the inner periphery opposing surface 40 is a cylindrical surface or a substantially cylindrical surface having the axis line x as the center axis or substantially the center axis.

Further, as described above, the inner periphery side labyrinth seal forming portion 22 is formed as an attaching portion for attaching the inner periphery member 20 to the inner ring of the bearing. Specifically, an attaching surface 22a, which is a surface facing the inner periphery side of the inner periphery side labyrinth seal forming portion 22, forms, on the inner periphery side, a space (a through-hole) through which the inner ring can be inserted, and the attaching surface 22a is formed so as to be fixable to the inner ring with the inner ring press-fitted thereto. As shown in Figs. 1 and 2, for example, the attaching surface 22a of the inner periphery side labyrinth seal forming portion 22 is a cylindrical surface or a substantially cylindrical surface having the axis line x as the center axis or substantially the center axis.

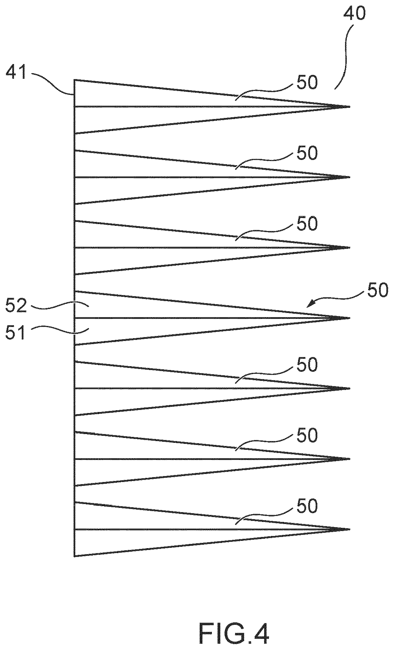

Further, as shown in Figs. 1 to 3, on the inner periphery opposing surface 40 of the inner periphery side labyrinth seal forming portion 22 of the inner periphery member 20, the plurality of inner periphery side projections 50 is formed, the inner periphery side projections 50 projecting from the inner periphery opposing surface 40 toward the outer periphery side and extending along the axis line x. The inner periphery side projections 50 are provided side-by-side in the circumferential direction on the inner periphery opposing surface 40, and are arranged parallel or substantially parallel in the circumferential direction without intervals therebetween in an outer side rim 41 of the inner periphery opposing surface 40, as shown in Fig. 4, for example. Fig. 4 is a partially enlarged view schematically showing the inner periphery opposing surface 40 of the inner periphery member 20 of the sealing device 1 as viewed from a radial outer periphery side, the view showing the inner periphery side projections 50. The inner periphery side projections 50 may be provided on the inner periphery opposing surface 40 so as to be arranged at equal angular intervals or substantially equal angular intervals with gaps therebetween about the axis line x. The inner periphery side projections 50 may not be provided at equal angular intervals on the inner periphery opposing surface 40 about the axis line x. Further, as shown in Fig. 4, for example, the inner periphery side projections 50 extend parallel to or substantially parallel to the axis line x.

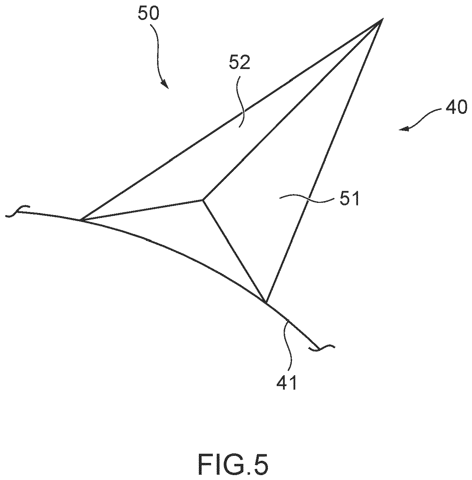

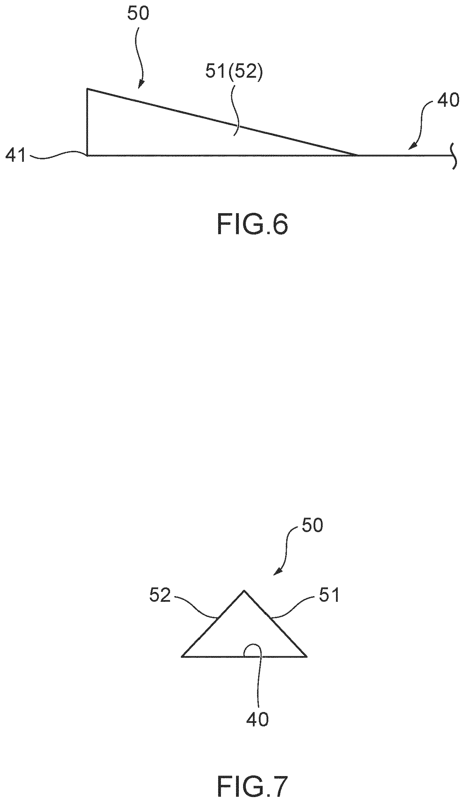

Fig. 5 is a partially enlarged perspective view showing the enlarged inner periphery side projection 50, Fig. 6 is a cross-sectional view along an extending direction of the inner periphery side projection 50, and Fig. 7 is a cross-sectional view along a width direction orthogonal to the extending direction of the inner periphery side projection 50. Fig. 6 shows a cross-section along the extending direction in the center or substantially the center in the width direction and Fig. 7 shows a cross-section along a width direction in a given point in the extending direction. In the illustrated examples, the inner periphery side projection 50 extends parallel to or substantially parallel to the axis line x and the extending direction of the inner periphery side projection 50 is the axis line x direction or a direction substantially parallel to the axis line x. Further, the width direction of the inner periphery side projection 50 is the circumferential direction or substantially the circumferential direction about the axis line x.

As shown in Figs. 4 to 7, the inner periphery side projection 50 is formed in a shape tapered as progress toward the inner side, the dimension (width) in the width direction of the inner periphery side projection 50 is reduced as progress toward the inner side, and a projecting amount of the inner periphery side projection 50 from the inner periphery opposing surface 40 is reduced as progress toward the inner side. As shown in Fig. 5, the inner periphery side projection 50 includes a pair of side surfaces 51, 52 facing in the circumferential direction, the side surface 51 facing one side in the circumferential direction, the side surface 52 facing the other side in the circumferential direction. The side surface 51 is inclined to the other side in the circumferential direction and forms an oblique surface inclined to the other side in the circumferential direction toward the inner side in the axis line x direction, and likewise, the side surface 52 is inclined to the one side in the circumferential direction and forms an oblique surface inclined to the one side in the circumferential direction toward the inner side in the axis line x direction.

The inner periphery side projection 50 is symmetrical or substantially symmetrical relative to a surface along the extending direction in the center or substantially the center in the width direction, and is formed in a triangular pyramid shape or a substantially triangular pyramid shape extending parallel to or substantially parallel to the axis line x toward the inner side, as shown in Fig. 5, for example. Specifically, as shown in Fig. 6, the cross-sectional shape of the cross-section along the extending direction of the inner periphery side projection 50 is a right-angled triangle or a substantially right-angled triangle, and as shown in Fig. 7, the cross-sectional shape of the cross-section along the width direction of the inner periphery side projection 50 is a cross-sectional shape in which the vertex angle is sandwiched by two equilateral or substantially equilateral sides. The cross-sectional shape of the cross-section along the extending direction of the inner periphery side projection 50 is the same or substantially the same at any points in the width direction of the inner periphery side projection 50. Further, the cross-sectional shape of the cross-section along the width direction of the inner periphery side projection 50 is the same or substantially the same at any points in the extending direction of the inner periphery side projection 50.

As shown in Fig. 3, the labyrinth seal L2 on the inner periphery side is an annular space with the outer periphery side having a diameter enlarged as progress toward the inner side so as to increase the radial width as progress toward the inner side. Further, in the labyrinth seal L2, the inner periphery side projection 50 is present on the outer side in the axis line x direction. A gap is formed between the inner periphery side projection 50 and the outer periphery opposing surface 30 so that the inner periphery side projection 50 does not contact the outer periphery opposing surface 30 of the outer periphery member 10.

The outer periphery member 10 is formed with a metal material and the inner periphery member 20, excluding the inner periphery side projection 50, is formed with a metal material. The inner periphery side projection 50 is formed with an elastic material, for example, rubber or resin. Further, the outer periphery member 10 may be formed with a material other than a metal material, and similarly, the portion of the inner periphery member 20 excluding the inner periphery side projection 50 may be formed with a material other than a metal material. Furthermore, the inner periphery side projection 50 of the inner periphery member 20 may be formed with a metal material or other materials, without being formed with an elastic material, and may be integrally formed with the other portion of the inner periphery member 20 with the same material, for example.

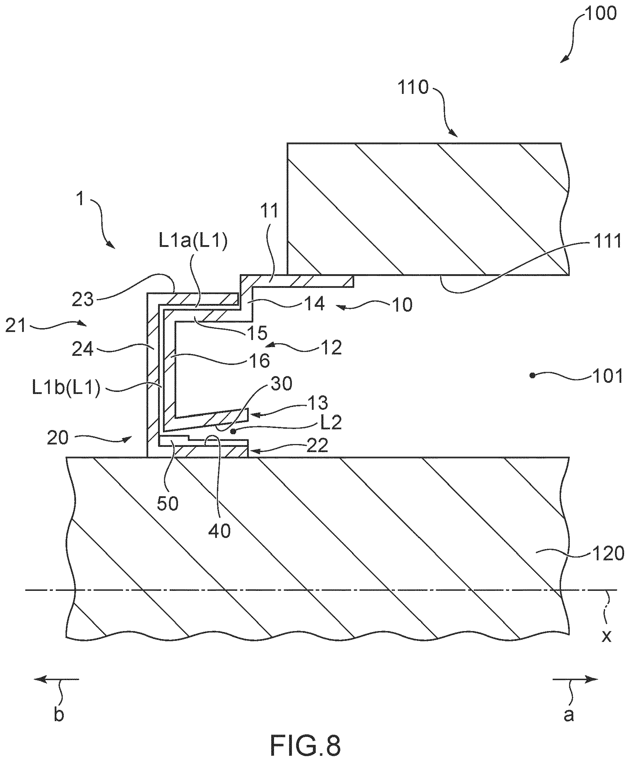

Next, the function of the sealing device 1 having the above-described configuration will be described. Fig. 8 is a cross-sectional view of the sealing device 1 in the usage state of being attached to a bearing 100. As shown in Fig. 8, the sealing device 1 becomes the usage state by attaching the outer periphery member 10 to an outer ring 110 of the bearing 100 and attaching the inner periphery member 20 to an inner ring 120 of the bearing 100. In the usage state, the sealing device 1 seals an internal space 101 of the bearing 100 so as to prevent a lubricant present in the internal space 101 from leaking to the outside of the internal space 101 and prevent foreign matter such as dust, muddy water, or water from entering the internal space 101. Note that the internal space 101 of the bearing 100 is provided with a rolling element (not shown) and the lubricant is provided for lubricating the rolling element. The bearing 100 is a bearing for, for example, an axle of a railway vehicle.

The outer periphery member 10 is fixed to the outer ring 110, with the attaching portion 11 press-fitted into an opening 111 of the outer ring 110 from the outer side. The inner periphery member 20 is fixed to the inner ring 120, with the inner ring 120 inserted and press-fitted into the inner periphery side labyrinth seal forming portion 22. The sealing device 1 is attached to the bearing 100 such that the outer periphery member 10 is fixed to the outer ring 110 and the inner periphery member 20 is fixed to the inner ring 120, so that the sealing device 1 becomes the usage state. In the usage state, the axis line x of the sealing device 1 corresponds to or substantially corresponds to the shaft center of the bearing 100. Further, in the usage state, the outer periphery member 10 and the inner periphery member 20 have the above-described relative positional relation (see Figs. 1 to 3). As shown in Fig. 8, the inner periphery member 20 is attached so as to cover a part of the outer periphery member 10 from the outer side.

Further, in the usage state, as described above, the outer periphery side labyrinth seal forming portion 21 of the inner periphery member 20 opposes the outer periphery side labyrinth seal forming portion 12 of the outer periphery member 10 so as to cover the outer periphery side labyrinth seal forming portion 12 from the outer side to form the labyrinth seal L1. Specifically, the axial sealing portion 23 of the outer periphery side labyrinth seal forming portion 21 of the inner periphery member 20 opposes, via a gap, the axial sealing portion 15 of the outer periphery side labyrinth seal forming portion 12 of the outer periphery member 10 from the outer periphery side to form the labyrinth sealing portion L1a extending in the axis line x direction. Further, the radial sealing portion 24 of the outer periphery side labyrinth seal forming portion 21 of the inner periphery member 20 opposes, via a gap, the radial sealing portion 16 of the outer periphery side labyrinth seal forming portion 12 of the outer periphery member 10 from the outer side to form the labyrinth sealing portion L1b extending in the radial direction.

Further, in the usage state, as described above, the inner periphery side labyrinth seal forming portion 13 of the outer periphery member 10 opposes, via a gap, the inner periphery side labyrinth seal forming portion 22 of the inner periphery member 20 so as to cover the inner periphery side labyrinth seal forming portion 22 from the outer periphery side to form the labyrinth seal L2. Specifically, the outer periphery opposing surface 30 of the inner periphery side labyrinth seal forming portion 13 of the outer periphery member 10 opposes, via a gap, the inner periphery opposing surface 40 of the inner periphery side labyrinth seal forming portion 22 of the inner periphery member 20 from the outer periphery side to form the labyrinth seal L2 extending in the axis line x direction.

In this manner, in the usage state, in the sealing device 1, the two labyrinth seals L1, L2 are formed between the outside of the bearing 100 and the internal space 101, to thus be able to obtain high sealability of the internal space 101 by the sealing device 1. Further, the labyrinth seal L1 is a bending labyrinth seal with the labyrinth sealing portion L1a extending in the axis line x direction and the labyrinth sealing portion L1b extending in the radial direction, so that the sealing performance of the labyrinth seal L1 is improved. Furthermore, the labyrinth seal L2 bends with respect to the labyrinth sealing portion L1b of the labyrinth seal L1, and with such bending, the sealing performance of the labyrinth seals L1, L2 is improved. In this manner, the labyrinth seals L1, L2 formed by the sealing device 1 have two bending points, to thus improve the sealing performance.

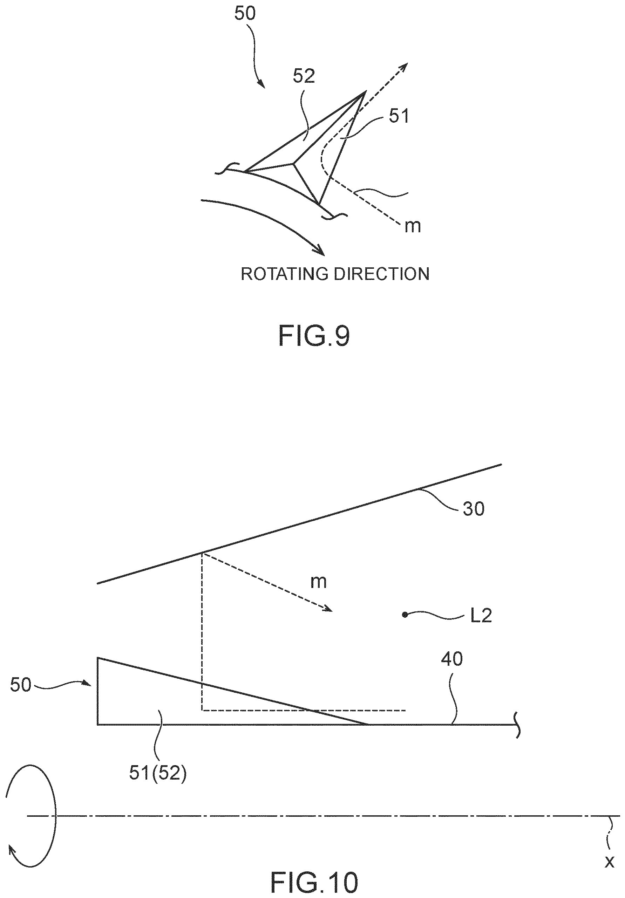

Further, in the labyrinth seal L2 on the inner periphery side, the plurality of inner periphery side projections 50 is present along the inner periphery opposing surface 40. Thus, as denoted by a broken line m in Figs. 9 and 10, the lubricant moving from the internal space 101 toward the outside accompanying the rotation of the inner ring 120 moves along or bumps against and bounces back from the side surface 51 or the side surface 52 of the inner periphery side projection 50 mainly facing the side in the rotating direction and receives a centrifugal force to be splattered to the outer periphery side. The lubricant that was splattered to the outer periphery side bumps against the outer periphery opposing surface 30 of the outer periphery member 10 and the lubricant that bumped against the outer periphery opposing surface 30 receives a reaction force in a direction orthogonal to the outer periphery opposing surface 30 to be splattered to the inner periphery side. As shown in Fig. 10, the outer periphery opposing surface 30 has a diameter enlarged as progress toward the inner side and is inclined to the outer periphery side toward the inner side. Thus, the lubricant that bumped against the outer periphery opposing surface 30 receives a reaction force in a direction inclined to the inner side toward the radial direction to be splattered in this direction. Thus, the lubricant is returned toward the inner side of the internal space 101.

Further, along with the rotation of the inner ring 120, the inner periphery side projection 50 also rotates, and thus the lubricant moving from the internal space 101 toward the outside is moved along the side surface 51 or the side surface 52 of the inner periphery side projection 50 to the inner side with the screw effect of the inner periphery side projection 50 (see Fig. 9) and is returned toward the inner side of the internal space 101.

In this manner, the sealing device 1 can return the lubricant moving from the internal space 101 toward the outside accompanying the rotation of the inner ring 120 to the internal space 101 by means of the inner periphery side projection 50 and the outer periphery opposing surface 30. Thus, in addition to the function of the labyrinth seal L2, the inner periphery side projection 50 and the outer periphery opposing surface 30 can also prevent the leakage of the lubricant so that the sealing performance of the sealing device 1 can be improved.

Further, as described above, the side surfaces 51, 52 of the inner periphery side projection 50 are each inclined to either side in the circumferential direction, and each form an oblique surface inclined to either side in the circumferential direction toward the inner side in the axis line x direction. In other words, a line orthogonal to the side surfaces 51, 52 of the inner periphery side projection 50 or a normal of the side surfaces 51, 52 is inclined to the inner side relative to the radial direction. Therefore, in the usage state, the lubricant that bumped against the side surfaces 51, 52 of the inner periphery side projection 50 is bounced back to the internal space 101 side or is guided along the side surfaces 51, 52 to the internal space 101 side. Thus, the sealing performance for the lubricant can be improved.

Furthermore, the side surface 51 and the side surface 52 of the inner periphery side projection 50 are symmetrical or substantially symmetrical relative to a surface along the extending direction, and thus, the inner periphery side projection 50 can function to prevent the leakage of the lubricant described above, when the inner ring 120 rotates in either direction.

Moreover, since the sealing device 1 has the non-contact labyrinth seals L1, L2, without having a contact seal, an increase in temperature and an increase in pressure in the internal space 101 of the bearing 100 can be restrained.

In this manner, according to the sealing device 1 according to the first embodiment of the present invention, the sealing performance can be improved while restraining the increase in temperature and the increase in pressure in the internal space 101 of the bearing 100.

Note that in the sealing device 1, the outer periphery opposing surface 30 is a surface having a diameter enlarged as progress toward the inner side and forms a surface inclined toward the outer side, but the outer periphery opposing surface 30 may be a cylindrical surface or a substantially cylindrical surface having the axis line x as the center or substantially the center. In particular, when the side surfaces 51, 52 of the inner periphery side projection 50 are each inclined to either side in the circumferential direction and each form an oblique surface inclined to either side in the circumferential direction toward the inner side in the axis line x direction, as described above, the lubricant that bumped against the side surfaces 51, 52 of the inner periphery side projection 50 can be moved toward the internal space 101 side, and even when the lubricant bumps against the cylindrical surface-shaped or the substantially cylindrical surface-shaped outer periphery opposing surface 30, the lubricant can be moved toward the internal space 101 side.

Further, in the sealing device 1, the inner periphery side projection 50 extends from the outer side rim 41 of the inner periphery opposing surface 40 toward the inner side, but the inner periphery side projection 50 may extend from a position on the inner side relative to the outer side rim 41 of the inner periphery opposing surface 40. For example, the inner periphery side projection 50 may extend from an opposing position 42 that is a position of the inner periphery opposing surface 40 opposing, in the radial direction, an outer side rim 31 of the outer periphery opposing surface 30 toward the inner side (see Fig. 3).

Next, a sealing device 2 according to a second embodiment of the present invention will be described. The sealing device 2 according to the second embodiment of the present invention differs from the above-described sealing device 1 according to the first embodiment of the present invention in the form of the inner periphery side labyrinth seal forming portion of the outer periphery member. Hereinafter, for the sealing device 2 according to the second embodiment, the descriptions of the same components or components functioning in the same manner as the components of the above-described sealing device 1 according to the first embodiment will be omitted by assigning such components the same reference signs, and different components will be described.

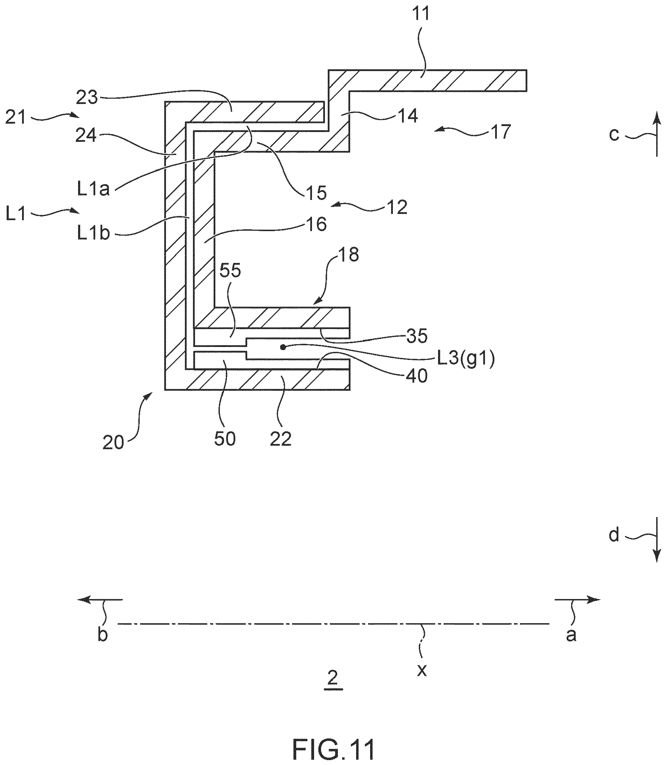

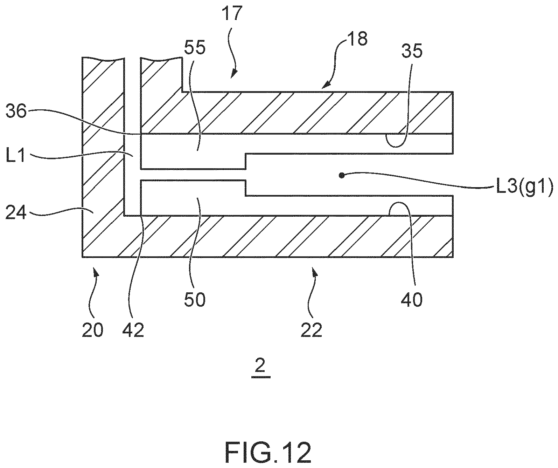

Fig. 11 is an enlarged cross-sectional view showing one side of a cross-section along the axis line x of the sealing device 2, and Fig. 12 is a partially enlarged cross-sectional view of the sealing device 2, the view showing an enlarged inner periphery side labyrinth seal forming portion 18 of an outer periphery member 17, which will be described later, and the enlarged inner periphery side labyrinth seal forming portion 22 of the inner periphery member 20.

As shown in Figs. 11 and 12, the sealing device 2 includes the outer periphery member 17 in place of the outer periphery member 10 of the sealing device 1, which differs from the sealing device 1. The outer periphery member 17 of the sealing device 2 includes the inner periphery side labyrinth seal forming portion 18 in place of the inner periphery side labyrinth seal forming portion 13 of the outer periphery member 10 of the sealing device 1, which differs from the outer periphery member 10 of the sealing device 1. The inner periphery side labyrinth seal forming portion 18 includes an outer periphery opposing surface 35 that is different from the outer periphery opposing surface 30 of the inner periphery side labyrinth seal forming portion 13 of the sealing device 1. The outer periphery opposing surface 35 is a surface formed by a tubular surface facing an inner periphery side of the inner periphery side labyrinth seal forming portion 18.

As shown in Figs. 11 and 12, the outer periphery opposing surface 35 is an annular surface around and extending along the axis line x and is provided so as to oppose the inner periphery opposing surface 40 of the inner periphery member 20 from the outer periphery side to form an annular space g1 so that an annular labyrinth seal L3 extending along the axis line x is formed, similarly to the outer periphery opposing surface 30 of the sealing device 1. Unlike the outer periphery opposing surface 30 of the sealing device 1, the outer periphery opposing surface 35 is a cylindrical surface or a substantially cylindrical surface having the axis line x as the center axis or substantially the center axis. Therefore, the labyrinth seal L3 formed between the outer periphery opposing surface 35 and the inner periphery opposing surface 40 is a cylindrical or a substantially cylindrical gap. Similarly to the labyrinth seal L2 of the sealing device 1, the labyrinth seal L3 communicates with the labyrinth seal L1. As shown in Figs. 11 and 12, for example, the inner periphery side labyrinth seal forming portion 18 is cylindrical or substantially cylindrical having the axis line x as the center axis or substantially the center axis.

Further, the outer periphery opposing surface 35 includes a plurality of outer periphery side projections 55 opposing the inner periphery side projections 50 of the inner periphery opposing surface 40 in the radial direction. The outer periphery side projection 55 is a projection projecting from the outer periphery opposing surface 35 toward the inner periphery side and extending along the axis line x. The outer periphery side projections 55 are provided side-by-side in the circumferential direction on the outer periphery opposing surface 35, and for example, are arranged parallel or substantially parallel in the circumferential direction without intervals in an outer side rim 36 of the outer periphery opposing surface 35, similarly to the inner periphery side projections 50 (see Figs. 4 and 12). The outer periphery side projections 55 may be provided on the outer periphery opposing surface 35 so as to be arranged at equal angular intervals or substantially equal angular intervals with gaps therebetween about the axis line x. The outer periphery side projections 55 may not be provided at equal angular intervals on the outer periphery opposing surface 35 about the axis line x. Further, the outer periphery side projections 55 extend parallel to or substantially parallel to the axis line x, for example.

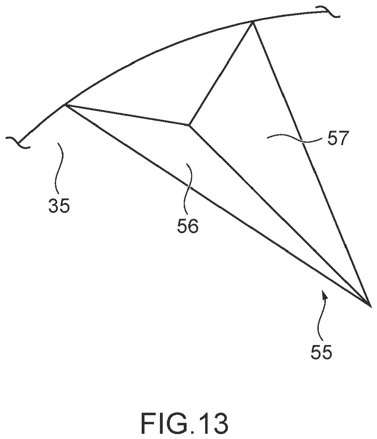

Fig. 13 is a partially enlarged perspective view showing the enlarged outer periphery side projection 55. The outer periphery side projection 55 is in a shape similar to the shape of the above-described inner periphery side projection 50. Specifically, the outer periphery side projection 55 extends parallel to or substantially parallel to the axis line x and the extending direction of the outer periphery side projection 55 is the axis line x direction or a direction substantially parallel to the axis line x. Further, the width direction of the outer periphery side projection 55 is the circumferential direction or substantially the circumferential direction about the axis line x.

As shown in Fig. 13, the outer periphery side projection 55 is formed in a shape tapered as progress toward the inner side, the dimension (width) in the width direction of the outer periphery side projection 55 is reduced as progress toward the inner side, and a projecting amount of the outer periphery side projection 55 from the outer periphery opposing surface 35 is reduced as progress toward the inner side. As shown in Fig. 13, the outer periphery side projection 55 includes a pair of side surfaces 56, 57 facing in the circumferential direction, the side surface 56 facing one side in the circumferential direction, the side surface 57 facing the other side in the circumferential direction. The side surface 56 is inclined to the other side in the circumferential direction and is inclined to the other side in the circumferential direction toward the inner side in the axis line x direction, and similarly, the side surface 57 is inclined to the one side in the circumferential direction and is inclined to the one side in the circumferential direction toward the inner side in the axis line x direction.

The outer periphery side projection 55 is symmetrical or substantially symmetrical relative to a surface along the extending direction in the center or substantially the center in the width direction, and is formed in a triangular pyramid shape or a substantially triangular pyramid shape extending parallel to or substantially parallel to the axis line x toward the inner side, as shown in Fig. 13, for example. Specifically, as shown in Fig. 13, the cross-sectional shape of the cross-section along the extending direction of the outer periphery side projection 55 is a right-angled triangle or a substantially right-angled triangle (see Fig. 6), and the cross-sectional shape of the cross-section along the width direction of the outer periphery side projection 55 is a cross-sectional shape in which the vertex angle is sandwiched by two equilateral or substantially equilateral sides (see Fig. 7). The cross-sectional shape of the cross-section along the extending direction of the outer periphery side projection 55 is the same or substantially the same at any points in the width direction of the outer periphery side projection 55. Further, the cross-sectional shape of the cross-section along the width direction of the outer periphery side projection 55 is the same or substantially the same at any points in the extending direction of the outer periphery side projection 55.

As shown in Figs. 11 and 12, the labyrinth seal L3 on the inner periphery side is a cylindrical or a substantially cylindrical space extending parallel to or substantially parallel to the axis line x. Further, in the labyrinth seal L3, the inner periphery side projection 50 and the outer periphery side projection 55 opposing each other in the radial direction are present on the outer side in the axis line x direction. A gap is formed between the inner periphery side projection 50 and the outer periphery side projection 55 so that the inner periphery side projection 50 and the outer periphery side projection 55 do not contact with each other.

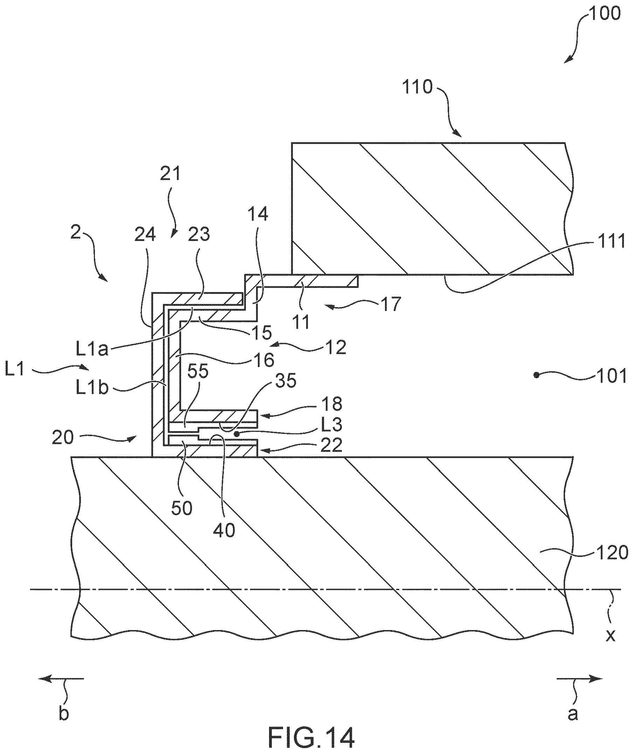

Next, the function of the sealing device 2 having the above-described configuration will be described. Fig. 14 is a cross-sectional view of the sealing device 2 in the usage state of being attached to the bearing 100. As shown in Fig. 14, similarly to the sealing device 1, the sealing device 2 becomes the usage state by attaching the outer periphery member 17 to the outer ring 110 of the bearing 100 and attaching the inner periphery member 20 to the inner ring 120 of the bearing 100.

Similarly to the sealing device 1, in the usage state, the outer periphery side labyrinth seal forming portion 21 of the inner periphery member 20 opposes the outer periphery side labyrinth seal forming portion 12 of the outer periphery member 17 so as to cover the outer periphery side labyrinth seal forming portion 12 from the outer side to form the labyrinth seal L1. Further, in the usage state, the inner periphery side labyrinth seal forming portion 18 of the outer periphery member 17 opposes, via a gap, the inner periphery side labyrinth seal forming portion 22 of the inner periphery member 20 so as to cover the inner periphery side labyrinth seal forming portion 22 from the outer periphery side to form the labyrinth seal L3. Specifically, the outer periphery opposing surface 35 of the inner periphery side labyrinth seal forming portion 18 of the outer periphery member 17 opposes, via a gap, the inner periphery opposing surface 40 of the inner periphery side labyrinth seal forming portion 22 of the inner periphery member 20 from the outer periphery side to form the labyrinth seal L3 extending in the axis line x direction.

In this manner, in the usage state, in the sealing device 2, the two labyrinth seals L1, L3 are formed between the outside of the bearing 100 and the internal space 101, to thus be able to obtain high sealability of the internal space 101 by the sealing device 2. Further, the labyrinth seal L1 bends, so that the sealing performance of the labyrinth seal L1 is improved, and the labyrinth seal L3 bends with respect to the labyrinth sealing portion L1b of the labyrinth seal L1, and with such bending, the sealing performance of the labyrinth seals L1, L3 is improved. In this manner, the labyrinth seals L1, L3 formed by the sealing device 2 have two bending points, to thus improve the sealing performance.

Further, in the labyrinth seal L3 on the inner periphery side, the plurality of inner periphery side projections 50 is present along the inner periphery opposing surface 40 and the plurality of outer periphery side projections 55 is present along the outer periphery opposing surface 35. Thus, similarly to the case of the above-described sealing device 1, the lubricant moving from the internal space 101 toward the outside accompanying the rotation of the inner ring 120 moves along or bumps against and bounces back from the side surface 51 or the side surface 52 of the inner periphery side projection 50 mainly facing the side in the rotating direction and receives a centrifugal force to be splattered to the outer periphery side. The lubricant that was splattered to the outer periphery side bumps against the outer periphery opposing surface 35 of the outer periphery member 10 or bumps against the outer periphery side projection 55 of the outer periphery opposing surface 35. The lubricant that bumped against the outer periphery opposing surface 35 receives a reaction force from the outer periphery opposing surface 35 to be splattered to the inner periphery side. The lubricant that bumped against the outer periphery side projection 55 receives a reaction force from the side surfaces 56, 57 to be splattered to the inner side. Further, the lubricant that bumped against the outer periphery side projection 55 is moved to the inner side along the side surfaces 56, 57 with the screw effect of the outer periphery side projection 55. Thus, the lubricant is returned toward the inner side of the internal space 101.

Further, since the inner periphery side projection 50 also rotates along with the rotation of the inner ring 120, the lubricant moving from the internal space 101 toward the outside is moved along the side surface 51 or the side surface 52 of the inner periphery side projection 50 to the inner side with the screw effect of the inner periphery side projection 50 and is returned toward the inner side of the internal space 101.

Similarly, accompanying the rotation of the inner ring 120, the outer periphery side projection 55 relatively rotates, and thus the lubricant moving from the internal space 101 toward the outside is moved along the side surface 56 or the side surface 57 of the outer periphery side projection 55 to the inner side with the screw effect of the outer periphery side projection 55 and is returned toward the inner side of the internal space 101.

In this manner, the sealing device 2 can return the lubricant moving from the internal space 101 toward the outside accompanying the rotation of the inner ring 120 to the internal space 101 by means of the inner periphery side projection 50, the outer periphery opposing surface 35, and the outer periphery side projection 55. Thus, in addition to the function of the labyrinth seal L3, the inner periphery side projection 50, the outer periphery opposing surface 35, and the outer periphery side projection 55 can also prevent the leakage of the lubricant so that the sealing performance of the sealing device 2 can be improved.

Furthermore, the side surface 51 and the side surface 52 of the inner periphery side projection 50 are symmetrical or substantially symmetrical relative to the surface along the extending direction and the side surface 56 and the side surface 57 of the outer periphery side projection 55 are symmetrical or substantially symmetrical relative to a surface along the extending direction. Thus, the inner periphery side projection 50 and the outer periphery side projection 55 can function to prevent the leakage of the lubricant described above, when the inner ring 120 rotates in either direction.

Moreover, since the sealing device 2 has the non-contact labyrinth seals L1, L3, without having a contact seal, an increase in temperature and an increase in pressure in the internal space 101 of the bearing 100 can be restrained.

In this manner, according to the sealing device 2 according to the second embodiment of the present invention, the sealing performance can be improved while restraining the increase in temperature and the increase in pressure in the internal space 101 of the bearing 100.

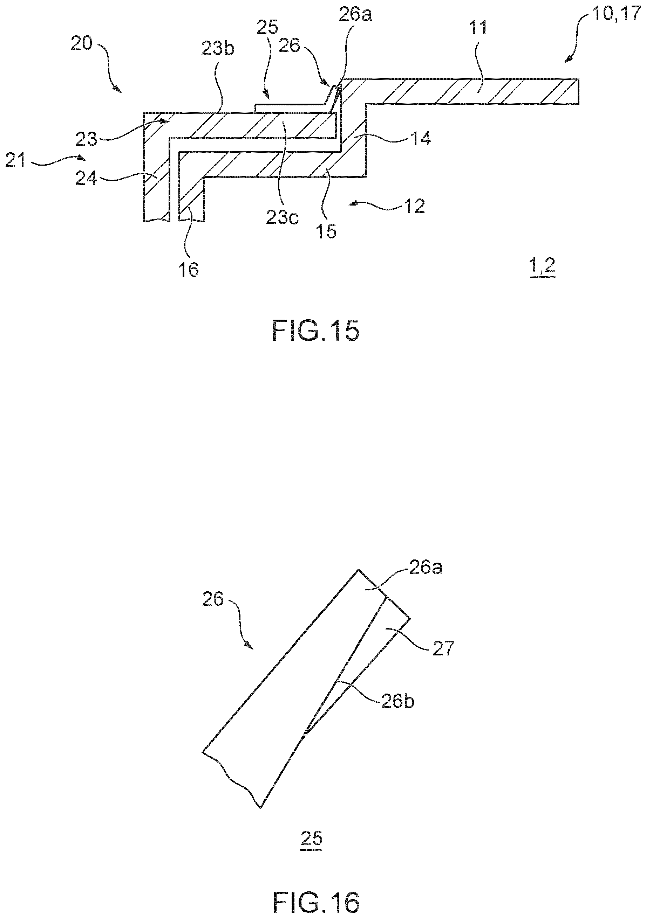

Next, a modification of the inner periphery member 20 of the above-described sealing devices 1, 2 will be described. Fig. 15 is a cross-sectional view showing the modification of the inner periphery member 20 of the sealing devices 1, 2. In the inner periphery member 20 according to the modification, a dust lip 25 is provided in the axial sealing portion 23 of the outer periphery side labyrinth seal forming portion 21. The dust lip 25 is fixed to an end portion 23c on the inner side on an outer peripheral surface 23b of the axial sealing portion 23 and forms an annular lip portion 26 around the axis line x extending toward the inner side and the outer periphery side. The lip portion 26 is formed so as to contact, at a tip end portion 26a, the step portion 14 of the outer periphery member 10. The tip end portion 26a of the lip portion 26 is formed so as to lightly contact the step portion 14 of the outer periphery member 10, and in this manner, the sliding resistance of the dust lip 25 is mitigated, and the generation of a negative pressure in the internal space 101 of the bearing 100 is restrained.

Further, as shown in Fig. 16, an inner peripheral surface 26b of the tip end portion 26a of the lip portion 26 of the dust lip 25 may be provided with a rib 27 extending along the axis line x direction (radial direction). One rib 27 or a plurality of ribs 27 may be provided. The ribs 27 are provided at equal angular intervals around the axis line x, for example. By means of the ribs 27, the tip end portion 26a of the lip portion 26 do not entirely contact the step portion 14 so that the sliding resistance of the dust lip 26 can be further mitigated, and the generation of a negative pressure in the internal space 101 of the bearing 100 can be further restrained.

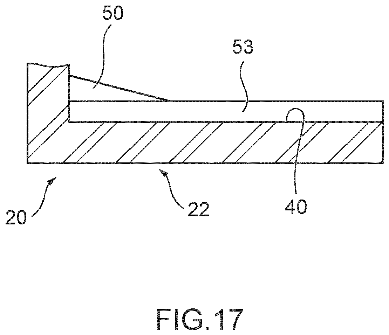

Next, a modification of the inner periphery side projection 50 of the above-described sealing devices 1, 2 will be described. Fig. 17 is a cross-sectional view showing the modification of the inner periphery side projection 50 of the sealing devices 1, 2. The inner periphery side projection 50 according to the modification may be formed in a tubular step portion 53 fixed to the inner periphery opposing surface 40. The step portion 53 is, for example, a cylindrical or a substantially cylindrical portion having the axis line x as the center axis or substantially the center axis. The step portion 53 and the inner periphery side projection 50 are integrally formed with the same material, such as an elastic material. The step portion 53 and the inner periphery side projection 50 may be separately formed to be attached. Further, as shown in Fig. 17, the outer periphery side projection 55 of the sealing device 2 may also be formed in the tubular step portion 53 fixed to the outer periphery opposing surface 35, similarly to the inner periphery side projection 50 according to the above-described modification.

The embodiments of the present invention have been described above, but the present invention is not limited to the sealing devices 1 and 2 of the aforementioned embodiments of the present invention and encompasses any aspects included in the gist and the scope of the claims of the present invention. In addition, the components may be selectively combined, as appropriate, so as to solve at least part of the above-described problems and achieve at least part of the above-described effects. For example, the shape, the material, the arrangement, the size, and the like of the constituent elements in the aforementioned embodiments may be changed, as appropriate, depending on the specific aspect of the use of the present invention.

Further, in the above-described description, the sealing devices 1, 2 according to the embodiments of the present invention are used for a bearing for an axle of a railway vehicle, but the attachment object of the sealing device according to the present invention is not limited to the bearing for the axle of the railway vehicle. The sealing device according to the present invention can be used for any objects that can utilize the function produced by the present invention, such as bearings for automobiles and bearings for industrial machines.

### List of Reference Signs

- 1: sealing device
- 10, 17: outer periphery member
- 11: attaching portion
- 11a: end portion
- 12: outer periphery side labyrinth seal forming portion
- 13, 18: inner periphery side labyrinth seal forming portion
- 14: step portion
- 14a: end portion
- 15: axial sealing portion
- 15a: end portion
- 16: radial sealing portion
- 16a: end portion
- 20: inner periphery member
- 21: outer periphery side labyrinth seal forming portion
- 22: inner periphery side labyrinth seal forming portion
- 22a: attaching surface
- 23: axial sealing portion
- 23a, 23c: end portion
- 23b: outer peripheral surface
- 24: radial sealing portion
- 24a: end portion
- 25: dust lip
- 26: lip portion
- 26a: tip end portion
- 26b: inner peripheral surface
- 27: rib
- 30, 35: outer periphery opposing surface
- 31, 36: outer side rim
- 40: inner periphery opposing surface
- 41: outer side rim
- 42: opposing position
- 50: inner periphery side projection
- 51, 52: side surface
- 53: step portion
- 55: outer periphery side projection
- 56, 57: side surface
- 100: bearing
- 101: internal space
- 110: outer ring
- 111: opening
- 120: inner ring
- g, g1: space
- L1, L2, L3: labyrinth seal
- L1a, L1b: labyrinth sealing portion
- L1c: end portion
- x: axis line

## Claims

1. A sealing device for sealing a space between an inner ring and an outer ring of a bearing, the sealing device being **characterized by** comprising:
an outer periphery member being annular around an axis line and being attached to the outer ring; and
an inner periphery member being annular around the axis line and being attached to the inner ring,
wherein
the outer periphery member includes an outer periphery opposing surface that is an annular surface around and extending along the axis line,
the inner periphery member includes an inner periphery opposing surface that is an annular surface around and extending along the axis line,
the outer periphery opposing surface and the inner periphery opposing surface are provided such that the inner periphery opposing surface opposes the outer periphery opposing surface from an inner periphery side so as to form an annular space, and
a plurality of inner periphery side projections is formed on the inner periphery opposing surface, the inner periphery side projections projecting from the inner periphery opposing surface toward an outer periphery side and extending along the axis line.

2. The sealing device according to claim 1, **characterized in that** a width in a direction around the axis line of each of the inner periphery side projections is tapered as progress toward a side of the space.

3. The sealing device according to claim 1 or 2, **characterized in that** a projecting amount of the inner periphery side projections from the inner periphery opposing surface is reduced as progress toward a side of the space.

4. The sealing device according to any one of claims 1 to 3, **characterized in that** the outer periphery opposing surface has a diameter enlarged as progress toward a side of the space.

5. The sealing device according to any one of claims 1 to 4, **characterized in that** the inner periphery side projections are formed with an elastic material.

6. The sealing device according to any one of claims 1 to 5, **characterized in that** a plurality of outer periphery side projections is formed on the outer periphery opposing surface, the outer periphery side projections projecting from the outer periphery opposing surface toward the inner periphery side and extending along the axis line.

7. The sealing device according to claim 6, **characterized in that** the outer periphery side projections are formed with an elastic material.

8. The sealing device according to any one of claims 1 to 7, **characterized in that** an end face on the outer periphery side of the inner periphery member is provided with a dust lip, the dust lip being formed so as to contact the outer periphery member.
